# FASCICULE DE BREVET EUROPEEN

(11) **EP 1 528 614 B1**
(45) Date de publication et mention de la délivrance du brevet: **04.07.2012**
(21) Numéro de dépôt: 04292403.5
(22) Date de dépôt: 11.10.2004
(51) Int. Cl.: H01M 8/02

(54) **Structure pour pile à combustible**
Brennstoffzellenanordnung
Fuel cell assembly

(30) Priorité: 31.10.2003 FR 0312718
(43) Date de publication de la demande: 04.05.2005
(73) Titulaire: SNECMA, 75015 Paris (FR)
(72) Inventeur: Garceau, Patrick, 27950 St Pierre d'Autils (FR)
(74) Mandataire: Thévenet, Jean-Bruno

(56) Documents cités:
- WO-A-03/047017
- DE-A- 19 947 858
- US-B1- 6 444 340

## Description

### Domaine de l'invention

La présente concerne les piles à combustible et plus particulièrement la structure interne qui forme le coeur de ces piles.

### Arrière plan de l'invention

Les piles à combustible comprennent typiquement un ensemble de cellules élémentaires chacune constituée de deux électrodes (anode et cathode) séparées par un électrolyte et assemblées les unes aux autres en série pour former un empilement également appelé "stack". En alimentant chaque électrode avec un réactif approprié, à savoir un combustible pour l'une et un comburant pour l'autre, on obtient une réaction électrochimique qui permet de créer une différence de potentiel entre les électrodes et donc de produire du courant électrique. Cet empilement correspond au coeur de la pile à combustible puisque c'est dans celui-ci que va se produire la réaction électrochimique qui va permettre de générer le courant électrique.

Afin d'alimenter chaque électrode en réactif et de collecter le courant produit, on utilise des éléments d'interface spécifiques que l'on appelle généralement "plaques bipolaires" et qui sont disposés de chaque côté des cellules élémentaires.

Ces plaques bipolaires se présentent généralement sous la forme d'un composant unique accolé au support d'anode ou de cathode. Elles assurent plusieurs fonctions associées à la réaction électrochimique respectivement pour la cathode et l'anode. Ces fonctions sont les suivantes:
- alimenter les électrodes en réactif,
- assurer la circulation et le confinement de chacun des réactifs,
- collecter le courant et assurer la continuité électrique dans l'empilement,
- collecter et évacuer l'eau produite et les éventuels réactifs en excès,
- évacuer l'énergie thermique dissipée par la réaction.

Par conséquent, la réalisation de tels éléments est soumise à de nombreuses contraintes en ce qui concerne le choix du ou des matériaux constitutifs ainsi que des méthodes de fabrication. En effet, les éléments doivent être constitués d'un matériau qui est à la fois bon conducteur électrique et thermique, résistant aux agressions du milieu (acide ou basique) et imperméable aux gaz réagissant. De plus, ils doivent comporter sur chacune de leur face des canaux de distribution millimétriques afin de permettre une diffusion homogène des réactifs jusqu'aux électrodes et de gérer l'évacuation de l'eau et de l'éventuel excès de réactif.

Les réalisations les plus courantes utilisent du graphite et mettent en oeuvre des techniques d'usinage à l'outil, telles que la gravure, pour la formation de canaux de distribution pour les réactifs. Ces techniques d'usinage sont très chères et difficile à reproduire à l'identique pour chaque pièce.

Une autre solution connue consiste à utiliser la technologie des échangeurs métalliques à plaques minces qui sont mises en forme par emboutissage ou thermocompression par exemple. Cependant, la fabrication et l'assemblage de telles pièces est délicate car elle suppose notamment de maîtriser parfaitement l'étanchéité entre les éléments assemblés, ce qui rend une fabrication industrielle à grande échelle difficilement envisageable.

Le document US 6 444 340 divulgue une structure de pile à combustible d'oxyde solide possédant une plaque de séparation gazeuse et une couche d'argent conductrice située entre la plaque de séparation gazeuse et la couche cathodique de la pile à combustible. La couche d'argent se présente sous la forme d'un treillis ou d'un autre type de feuille permettant au gaz contenant de l'oxygène et situé dans des canaux d'accéder à la couche cathodique à travers la couche d'argent. La plaque de séparation gazeuse possède une couche d'oxyde d'aluminium du côté cathode et peut être constituée par de l'acier inoxydable.

Quelle que soit la solution adoptée, c'est l'élément d'interface formant la plaque bipolaire qui détermine l'encombrement et la masse de l'empilement, et surtout, dans une plus large mesure, le coût de la structure et, donc, celui de la pile à combustible.

Ainsi, malgré leur rendement énergétique élevé et un fonctionnement respectueux de l'environnement, les piles à combustibles ne sont présentes que dans un très petit nombre d'appareils et souvent à titre expérimental. Le développement industriel et commercial des piles à combustible est actuellement fortement freiné par certaines difficultés qui n'ont pas encore été surmontées. Le coût représente aujourd'hui le principal obstacle à une production à grande échelle et à une commercialisation compétitive des piles à combustible.

### Objet et résumé de l'invention

La présente invention a pour but de proposer une structure de pile à combustible dont la conception permet une fabrication en série aisée avec des matériaux économiques de manière à réduire significativement le coût de fabrication et à garantir les performances et la fiabilité de la pile.

Ce but est atteint gràce à une structure pour pile à combustible telle que définie dans la présente revendication 1.

L'invention propose une conception de structure pour pile à combustible dans laquelle les fonctions de distribution de réactif et de collecte du courant sont assurées par des éléments distincts. Une telle conception permet d'utiliser des matériaux de fabrication moins coûteux et plus faciles à travailler industriellement que ceux utilisés actuellement notamment dans les conceptions où un même élément doit assurer à la fois les fonctions de distribution de réactif et de collecte du courant.

Ainsi, le matériau constitutif de l'élément distributeur est choisi parmi les matériaux électriquement isolants, ce qui offre un large choix de matériaux possibles dont le prix de revient est bas et à partir desquels la fabrication à grande échelle et à faible coût de pièces peut être bien maîtrisée. Ainsi, d'une manière générale, l'élément distributeur peut être fabriqué à partir de tout matériau plastique qui peut être moulé par pressage, injection, extrusion ou autre. A titre d'exemple, l'élément distributeur peut être fabriqué à partir d'un matériau thermoplastique injecté, ce qui permet une fabrication précise en grande quantité qui minimise le coût fabrication de l'élément. Un tel thermoplastique peut être une résine époxyde comprenant de préférence une charge minérale pour améliorer sa conduction thermique.

De même, les matériaux disponibles pour fabriquer l'élément collecteur sont nombreux. Ainsi, il est facile de choisir un matériau qui est à la fois économique, solide et facile à travailler tel qu'un acier inoxydable ou du cuivre. Ce type de matériau peut être aisément approvisionné sous forme de minces feuilles de tôle réduisant encore le nombre des opérations nécessaires à la fabrication de l'élément collecteur.

Selon une caractéristique de l'invention, l'élément distributeur comprend un circuit de circulation interne pour un fluide de refroidissement. Ce circuit représente un avantage important de la structure de l'invention puisqu'il permet d'isoler électriquement le fluide utilisé pour le refroidissement du reste de la structure. En effet, l'élément distributeur de l'invention est formé d'un matériau isolant, ce qui permet de faire circuler un fluide caloporteur à l'intérieur de celui-ci pour prélever la chaleur générée tout en évitant la formation de liaisons électriques indésirables (ex. court-circuit) à l'intérieur de la pile.

Lorsque l'élément distributeur comprend un circuit de canaux sur chacune de ses faces, chaque circuit peut déboucher dans des orifices différents permettant d'alimenter une face avec un premier réactif et l'autre avec un second réactif. Dans ce cas, l'élément distributeur est logé à l'intérieur d'un élément collecteur formé d'une feuille de tôle pliée en deux, la cellule étant entourée par deux paires distributeur/collecteur ainsi assemblés.

D'une manière différente, les canaux de chaque face peuvent déboucher ensembles dans les mêmes orifices. Dans ce cas, les deux faces d'un même élément distributeur sont alors alimentées avec le même réactif. L'élément collecteur peut être aussi formé à partir d'une feuille de tôle pliée en deux mais qui forme un logement plus important pour permettre d'y loger non seulement un élément distributeur mais aussi une moitié de l'élément collecteur adjacent ainsi que la cellule. Une telle disposition permet de rétablir l'alternance de polarité entre deux cellules adjacentes dans une pile.

L'invention a également pour objet une pile à combustible comprenant une ou plusieurs structures telles que décrites précédemment.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue schématique en perspective d'un mode de réalisation d'une structure pour pile à combustible conforme à l'invention;
- les figures 2A, 2B et 2C sont respectivement des vues de dessus, de dessous et en coupe de l'élément distributeur de la figure 1,
- la figure 3 est une vue de l'élément collecteur de la figure 1 avant pliage,
- les figures 4A et 4B sont des vues en coupe de la structure de la figure 1 montrant notamment la circulation des réactifs dans la structure,
- la figure 5 est une autre vue en coupe de la structure de la figure 1,
- la figure 6 est une vue en perspective d'un autre mode de réalisation d'un élément distributeur conformément à l'invention,
- la figure 6A est une vue en coupe de l'élément distributeur de la figure 6, et
- la figure 7 est une vue en coupe montrant un arrangement particulier d'une structure comprenant l'élément distributeur de la figure 6 conformément à l'invention.

### Description détaillée d'un mode de réalisation

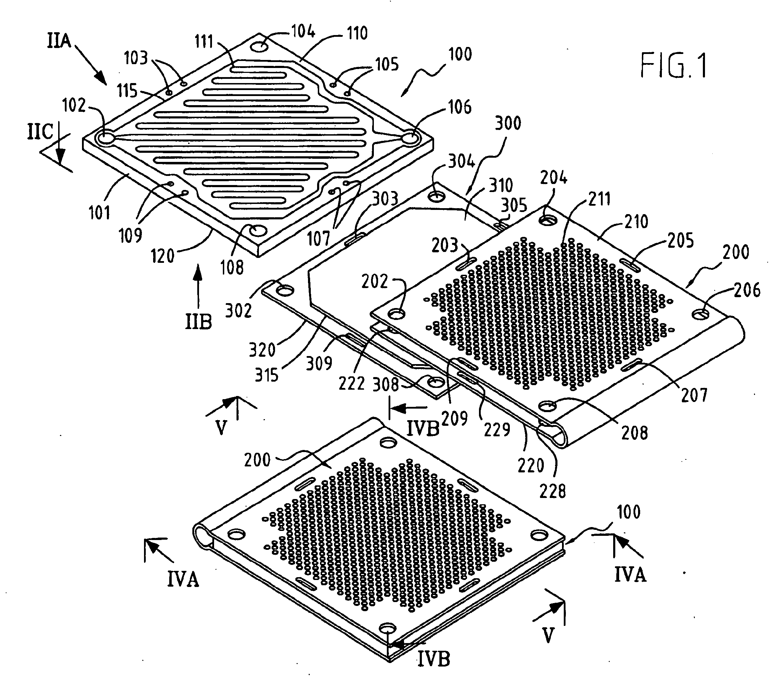

La figure 1 montre les éléments constitutifs d'une structure pour pile à combustible conformément à l'invention. Afin de pas alourdir la présentation de l'invention, l'assemblage illustré en figure 1 correspond à la structure ou empilement minimum qui peut être réalisé pour former le coeur d'une pile à combustible. Toutefois, une pile à combustible selon l'invention peut évidemment comprendre plusieurs fois cette structure. De façon connue, le nombre de structures ainsi que leur connexion en série ou en parallèle dépend des conditions de tension et de courant que l'on souhaite obtenir dans la pile.

La structure selon l'invention est formée d'une cellule élémentaire 300 comprenant une première électrode 310 et une seconde électrode 320 séparées par une membrane (non représentée) qui joue le rôle d'électrolyte. Ces éléments peuvent être assemblés entre eux au moment de la fabrication de la pile ou bien se présenter sous la forme d'un même composant (EME). Chaque électrode comporte en outre un joint sur son pourtour tel que le joint 315 montré pour l'électrode 310 sur la figure 1. Cette partie de la structure de la pile à combustible est bien connue en soi et ne sera pas décrite plus en détail. La présente invention peut être mise en oeuvre avec tout type de cellule élémentaire.

Pour que la réaction électrochimique se produise, chacune des électrodes de la cellule 300 doit être alimentée avec un réactif différent, à savoir un combustible pour l'une, en général de l'hydrogène, et un comburant pour l'autre, le plus souvent de l'oxygène ou plus simplement de l'air enrichi ou non en oxygène. Si l'électrode 310 reçoit l'hydrogène, elle correspond alors à l'anode et l'électrode 320 recevant l'oxygène forme la cathode. On conservera, par souci de clarté, la configuration ci-dessus dans la suite de la description.

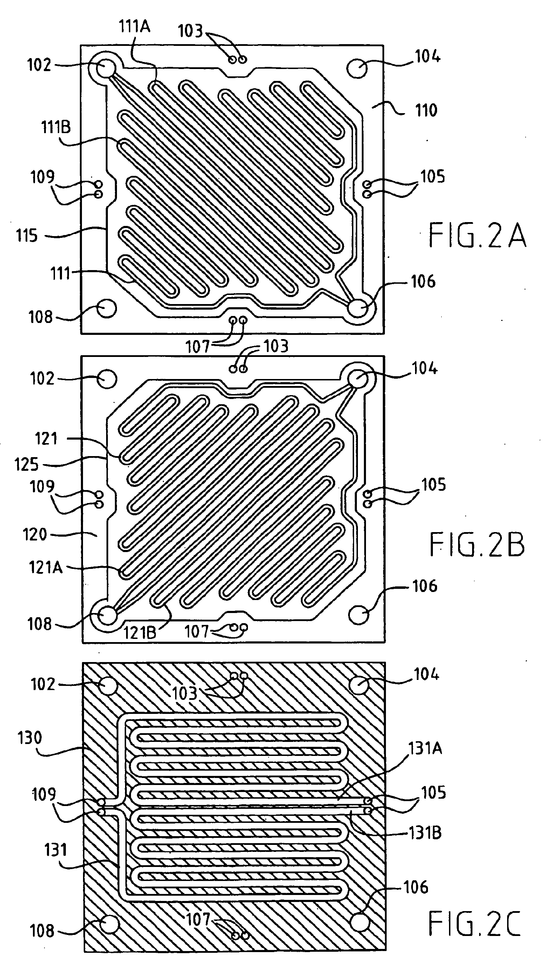

Pour alimenter chaque électrode en réactif, la structure comprend deux éléments distributeurs 100 qui sont disposés de chaque côté de la cellule 300. Chaque élément 100 présente deux faces IIA et IIB comportant des canaux de distribution qui s'étendent sur une zone correspondant sensiblement à la surface de l'électrode sur laquelle le réactif doit être diffusé. La figure 2A représente la face IIA de l'élément 100 représenté sur la figure 1. Sur cette face, l'élément 100 présente une surface 110 dans laquelle des canaux de distribution 111 sont formés. Les canaux 111 sont alimentés en réactif par un orifice 102 qui communique avec un circuit d'alimentation en réactif de la pile. Le réactif en excès ainsi que l'eau produite lors de la réaction électrochimique sont évacués par un orifice 106 qui communique avec un circuit d'évacuation de la pile. Tel que représenté sur la figure 2A, le réactif introduit par l'orifice 102 circule dans les canaux 111 du centre vers l'extérieur à travers deux circuits séparés 111A et 111B qui débouchent tous deux dans l'orifice 106 d'évacuation. On réalise ainsi une circulation continue du réactif à la surface 110 de l'élément distributeur 100. La figure 2B représente la face IIB de l'élément 100. Cette face se distingue de la face IIA en ce que les canaux 121 formés sur sa surface 120 sont reliés à deux orifices différents 104 et 108. Ceci est du au fait que l'élément distributeur 100 est destiné à distribuer un réactif différent sur chaque face. Aussi, afin que les deux réactifs différents ne se rencontrent pas, les canaux 111 de la face IIA et les canaux 121 de la face IIB ne doivent pas communiquer entre eux. De la même façon que pour les canaux 111, les canaux 121 comprennent deux circuits séparés 121A et 121B, recevant chacun le réactif par l'orifice 108, l'excès de réactif ainsi que l'eau collectée dans les canaux étant évacués par l'orifice 104.

L'élément distributeur 100 de l'invention comprend en outre un circuit interne de circulation pour un fluide de refroidissement. Ce circuit est illustré sur la figure 2C qui présente la partie interne de l'élément 100 suivant la coupe IIC indiquée sur la figure 1. Tel que représenté sur la figure 2C, l'élément 100 renferme des canaux 131 qui contrairement à ceux ménagés en surface sont confinés à l'intérieur de l'élément 100. Les canaux 131 forment un circuit de circulation 130 pour un fluide de refroidissement, tel qu'un fluide caloporteur. Etant donné que la chaleur dégagée par la réaction électrochimique est plus importante au centre des éléments qu'à leur périphérie, il est préférable de faire circuler le fluide de refroidissement d'abord au centre de l'élément afin de favoriser au maximum le prélèvement de chaleur dans la zone la plus chaude. A cet effet, comme représentés sur la figure 2C, les canaux 131 comprennent deux circuits séparés 131A et 131B qui couvrent chacun une moitié de l'élément en partant du centre de celui-ci. Ainsi, un fluide de refroidissement reçu par l'orifice 105 circule d'abord dans la partie centrale de l'élément qui est la plus chaude puis au fur et à mesure de son réchauffement, circule vers les parties moins chaudes pour être enfin évacué par l'orifice 109.

Un tel circuit de refroidissement interne présente un avantage important puisqu'il permet d'isoler électriquement le fluide utilisé pour le refroidissement du reste de la structure. En effet, l'élément distributeur de l'invention est constitué d'un matériau électriquement isolant, ce qui permet de faire circuler un fluide à l'intérieur de celui-ci pour prélever la chaleur générée tout en évitant la formation de liaisons électriques indésirables (ex. court-circuit) à l'intérieur de la pile.

Ainsi, le matériau utilisé pour la fabrication de l'élément distributeur doit être simplement un matériau isolant électriquement et qui présente de préférence une relativement bonne conduction thermique, ce qui offre un large choix de matériaux possibles permettant de sélectionner un matériau dont le prix de revient est bas et à partir duquel la fabrication à grande échelle et à faible coût de pièces est bien maîtrisée. Par conséquent, l'élément distributeur peut être fabriqué à partir de tout matériau plastique qui peut être moulé par pressage, injection, extrusion ou autre. A titre d'exemple, l'élément distributeur peut être une pièce en matériau thermoplastique injecté, ce qui permet une fabrication précise en grande quantité à faible coût en comparaison par exemple du graphite utilisé dans les structures conventionnelles qui est non seulement coûteux à l'achat mais aussi difficile et cher à travailler. Un tel thermoplastique peut être une résine époxyde comprenant de préférence une charge minérale pour améliorer sa conduction thermique.

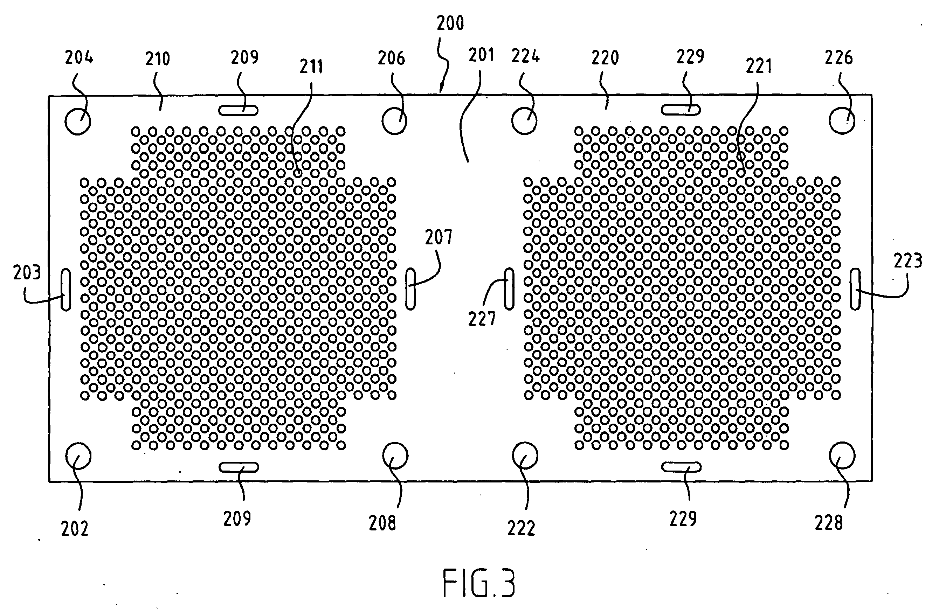

L'élément distributeur étant en matériau isolant conformément à l'invention, il est nécessaire d'établir une connexion électrique autour de cet élément afin d'assurer une continuité électrique dans la structure et de permettre la collecte du courant dans la pile. A cet effet, la structure selon l'invention comprend un élément conducteur 200 en un matériau électriquement conducteur. Tout type de matériau conducteur peut convenir pour la réalisation de l'élément 200. Néanmoins, on choisit de préférence un matériau résistant à l'oxydation tel qu'un acier inoxydable ou du cuivre. Toujours dans un but de réduction de coût de fabrication, on choisit de préférence un matériau économique qui est commercialisé sous une forme déjà exploitable. A titre d'exemple, les éléments 200 peuvent être réalisés à partir de minces feuilles de tôle. Comme illustré à figure 3, l'élément conducteur 200 est formé à partir d'une plaque rectangulaire en matériau conducteur qui, une fois pliée, forme un logement pour l'élément distributeur 100 (figure 1) de manière à assurer le passage du courant entre les deux faces de l'élément 100.

Une fois la structure de la figure 1 assemblée, une des deux portions 210, 220 de l'élément conducteur 200 vient s'interposer entre un élément distributeur et la cellule élémentaire 300. Il faut donc veiller à ce que l'élément conducteur 200 qui entoure les éléments distributeurs 100 n'entrave pas le passage du réactif entre l'élément distributeur et l'électrode de la cellule 300. A cet effet, chaque portion 210, 220 de l'élément 200 présente des perforations 211, respectivement 221, formant une grille qui s'étend sensiblement sur une zone correspondant à celle où circule le réactif en surface de l'élément distributeur. Des ouvertures de formes et de dimensions différentes peuvent être ménagées à la place des perforations 211 et 221. D'une manière générale, les éléments collecteurs de l'invention comportent des ouvertures dont les dimensions sont choisies de manière à permettre le passage du réactif vers l'électrode tout en assurant une irrigation complète des canaux en réactif pour une imprégnation homogène de toute la surface de l'électrode. Si les ouvertures sont choisies trop grandes, la répartition du réactif sur la surface de l'électrode ne sera pas homogène, les canaux n'étant pas irrigués régulièrement sur toute leur longueur. De plus, si le flux gazeux de réactif ne circule pas tout le long des canaux, il n'exerce plus son effet d'entraînement jusqu'à l'orifice de sortie et l'évacuation de l'eau produite ne peut plus être assurée dans l'élément distributeur. Les dimensions des ouvertures sont déterminées en fonction de celles des canaux.

D'autre part, en ménageant une pluralité de perforations ou d'ouvertures, on rend l'élément conducteur perméable au réactif tout en conservant une multiplicité de petites portions de matériau formant autant de chemins pour le courant et de points d'appui pour les électrodes qui sont mécaniquement fragiles.

L'étanchéité entre les éléments distributeurs 100 et les éléments conducteurs 200 peut être réalisée de plusieurs manières. De façon connue, les éléments (i.e. cellules élémentaires, éléments distributeurs et éléments collecteurs) de la ou des structures formant le coeur de pile sont maintenus les uns contre les autres avec application d'un effort de serrage relativement important. Ainsi, lorsque les matériaux des éléments collecteurs et distributeurs sont compatibles, comme dans le cas d'un métal et d'un plastique, l'étanchéité entre ces éléments est réalisée par simple contact entre les surfaces des éléments. Dans le cas où les deux matériaux sont trop durs, une solution consiste à disposer sur les surfaces 110 et 120 de l'élément distributeur un joint découpé qui couvre les surfaces à l'exception des canaux et des orifices. Il faut cependant veiller à ce que l'écrasement du joint soit suffisant pour maintenir l'élément collecteur en contact avec les canaux afin de faire circuler le flux de réactif tout le long de ces derniers.

Selon une autre variante, l'étanchéité peut être assurée au moyen de joints 115 et 125 (figures 2A et 2B) disposés respectivement sur les faces IIA et IIB de l'élément 100. Chaque joint 115, 125 entoure au moins les canaux et les deux orifices respectivement avec lesquels ils communiquent afin d'empêcher le réactif de déborder à l'extérieur de la structure. Dans ce cas, d'autres joints (non représentés) sont prévus pour assurer l'étanchéité autour des orifices restants.

Enfin, selon encore une autre possibilité, les éléments collecteurs peuvent être collés sur les éléments distributeurs au moyen d'une colle spéciale permettant le collage entre le métal et le plastique par exemple. Dans ce cas, on dispose l'adhésif sur toutes les zones qui doivent être couvertes par un joint réalisant ainsi en outre du collage une étanchéité entre les éléments collecteurs et distributeurs.

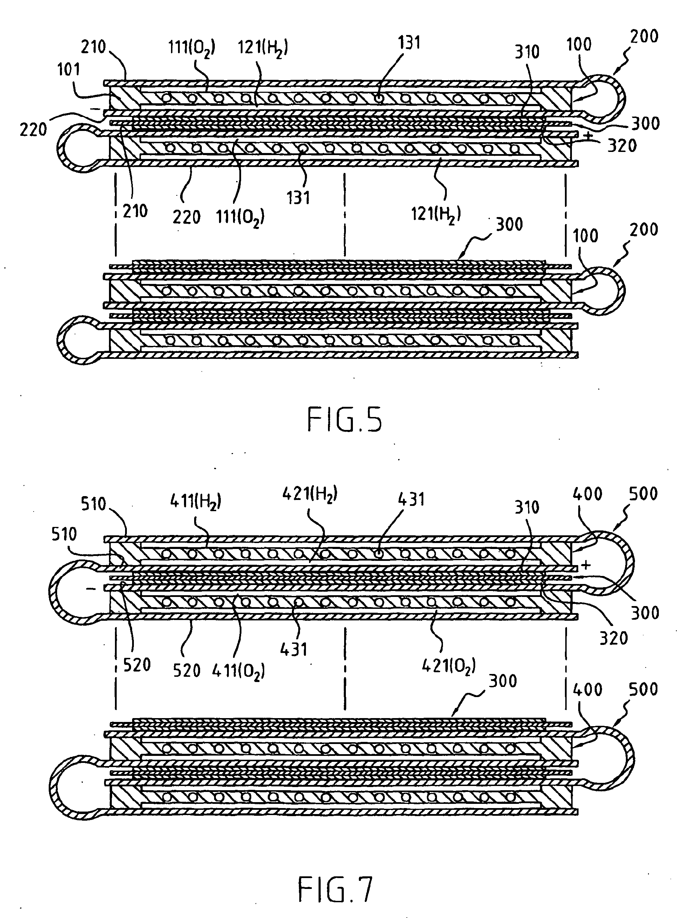

Une fois assemblés entre eux, les éléments de la figure 1 forment une structure (figure 5) capable de générer du courant par la réaction d'oxydation de l'hydrogène introduit sur l'électrode 310 (anode) et de réduction de l'oxygène sur l'électrode 320 (cathode) qui crée une différence de potentiel entre les portions 220 et 210 des deux éléments conducteurs. Telle que représentée à la figure 5, la pile à combustible peut être constituée d'un empilement de structures identiques, le nombre et la superficie des structures empilées dépend de la puissance que l'on souhaite fournir avec la pile, laquelle peut varier de quelques watts à plusieurs mégawatts.

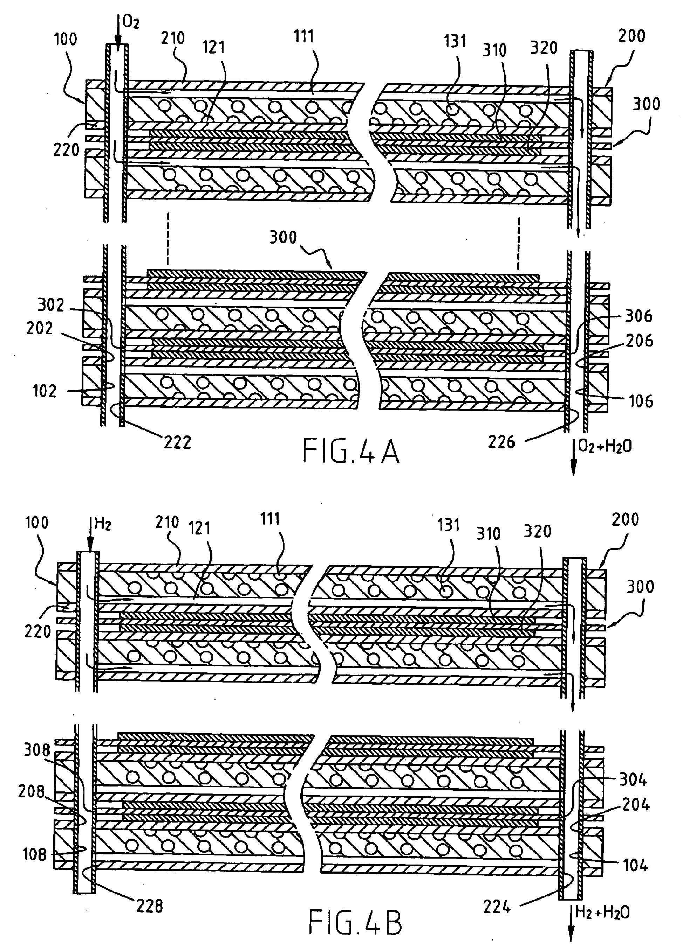

Les éléments distributeurs 100, les éléments conducteurs 200 ainsi que les cellules 300 comprennent tous une série d'orifices destinés à permettre la circulation séparée, à travers la structure, des deux réactifs et du fluide refroidissement ainsi que l'évacuation des excédents de réactifs avec l'eau produite. Comme illustré sur la figure 4A, une fois la structure assemblée, les orifices 102, 202, 222 et 302, respectivement de l'élément distributeur 100, de l'élément conducteur 200 et de la cellule 300 coopèrent pour former un conduit de circulation pour l'alimentation en oxygène des canaux 111. L'oxygène en excès ainsi que l'eau produite lors de la réaction sont évacués par un circuit formé par la coopération des orifices 106, 206, 226 et 306. De même, comme montré sur la figure 4B, les orifices 108, 208, 228 et 308 coopèrent pour permettre la circulation de l'hydrogène dans la structure et l'alimentation des canaux 121, l'évacuation de leur excédent et de l'eau produite se faisant par le circuit formé par la coopération des orifices 104, 204, 224 et 304. Les conduits illustrés sur les figures 4A et 4B ne sont qu'une représentation schématique des conduits formés lorsque les éléments de la structure sont maintenus en pression les uns contre les autres, les conduits étant formés naturellement par les orifices en coopération avec le cas échéant interposition d'un joint comme expliqué précédemment.

De la même manière, l'alimentation et l'évacuation du fluide de refroidissement s'opère respectivement à travers les orifices 105, 205, 225, 305, d'une part, et les orifices 109, 209, 229, 309, d'autre part. D'autre orifices tels que les orifices 103, 107, 203, 207, 303, etc... peuvent encore être ménagés pour la circulation du fluide de refroidissement notamment en cas de décalage angulaire entre deux éléments distributeurs successifs ou bien pour la circulation d'autres fluides.

Les orifices des éléments distributeurs destinés à recevoir le fluide de refroidissement pour le circuit interne 130 tels que les orifices 105, 109 constituent cependant un cas particulier. En effet, afin d'isoler entièrement le fluide de refroidissement du reste de la structure, il faut s'assurer que celui-ci n'est pas en contact avec les éléments collecteurs qui sont conducteurs. Cela peut se produire en entrée ou en sortie du circuit interne au niveau des orifices de passage du fluide de refroidissement ménagés sur les éléments collecteurs tels que les orifices 205 et 209. A cet effet, les orifices correspondant sur l'élément distributeur peuvent présenter des rebords qui s'engagent dans les orifices de l'élément collecteur afin de former à l'intérieur de ceux-ci un conduit électriquement isolé du matériau conducteur de l'élément collecteur. Selon une variante, des joints en matériau électriquement isolant peuvent être disposés autour des orifices de l'élément distributeur, les joints présentant des dimensions telles qui s'engagent dans les orifices de l'élément collecteur comme les rebords décrits ci-dessus.

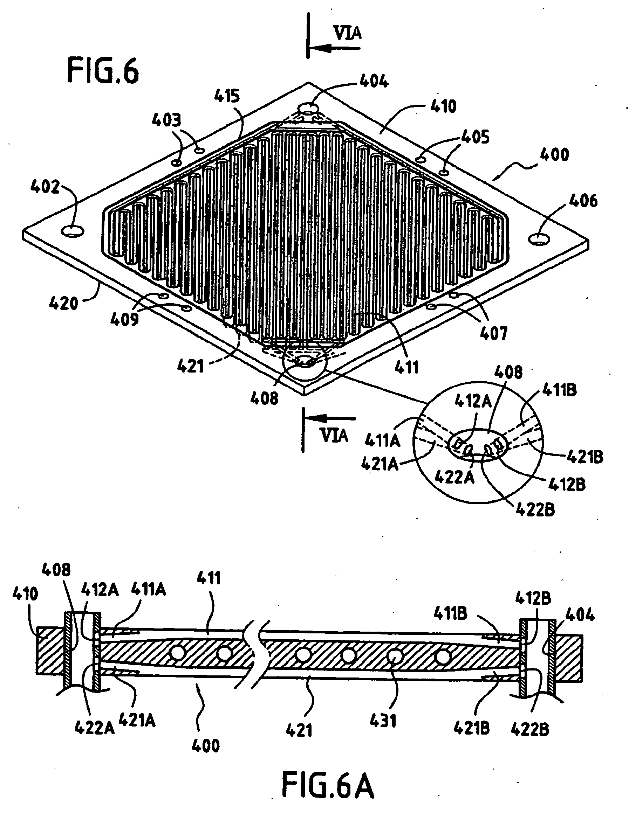

L'élément distributeur 400 représenté sur les figures 6 et 6A se distingue de l'élément 100 de la figure 1 en ce qu'il est destiné à recevoir sur ces deux faces le même réactif. A cet effet, les canaux 411 et 421 respectivement ménagés sur les surfaces 410 et 420 sont alimentés en réactif par le même orifice 408. Plus précisément, les deux circuits 411A et 411B des canaux 411 débouchent dans l'orifice 408 par des ouvertures respectivement 412A et 412B. De même, les deux circuits 421A et 421B des canaux 421 débouchent dans l'orifice 408 par des ouvertures respectivement 422A et 422B. Ainsi, le réactif qui circule par l'orifice 408 est distribué à la fois dans les canaux 411 et 422 et son excédent ainsi que l'eau produite sont évacués par l'orifice opposé 404 dans lequel débouchent les canaux 411 et 422 de la même manière que dans l'orifice 408.

Les éléments distributeurs 400 utilisés dans la structure sont de préférence identiques de manière à rationaliser leur fabrication. Dans ce cas, dans la structure, deux éléments distributeurs successifs sont décalés d'un un quart de tour afin de recevoir de l'hydrogène pour l'un et de l'oxygène pour l'autre. D'autre part, l'utilisation d'éléments distributeurs qui diffusent le même réactif sur leurs deux faces a pour conséquence de donner la même polarité aux électrodes en regard de cet élément. Afin de remédier à cette situation et comme illustré sur la figure 7, on utilise des éléments conducteurs 500 sensiblement identiques aux éléments 200 décrits précédemment mais avec des portions 510 et 520 plus écartées l'une de l'autre que dans l'élément 200 pour former un logement plus grand. Cet écartement plus grand entre les portions permet de disposer les éléments collecteurs 500 dans la structure d'une manière différente de celle de la figure 5 afin d'inverser les polarités pour rétablir "l'effet" série dans l'empilement. Concrètement, comme représenté en figure 7, deux éléments conducteurs 500 successifs sont engagés l'un dans l'autre avec la cellule 300 interposée entre eux.

L'élément 400 se distingue encore de l'élément 100 en ce que les premières portions de circuits 411A, 411B, 422A et 422B situées à proximité des orifices 404 et 408 sont enterrées sous la surface de l'élément. Cela permet d'établir une étanchéité entre la surface de l'élément distributeur et l'élément conducteur en disposant un joint 415 qui entoure seulement les canaux en surface à la différence du joint 115 utilisé avec l'élément 100 qui doit entourer en outre les orifices dans lesquels débouchent les canaux.

D'autre part, de même que pour l'élément 200 précédent, l'élément distributeur 400 comprend un circuit de circulation interne 431 (figure 6A) permettant de faire circuler, d'un orifice 405 à un orifice 409, un fluide de refroidissement isolément du reste de la structure, à savoir sans contact électrique possible avec les autres fluides et parties présents dans la structure.

## Revendications

1. Structure pour pile à combustible comprenant au moins une cellule (300) formée d'une première et seconde électrodes (310, 320) séparées par un électrolyte, la cellule étant disposée entre un premier et un second éléments d'interface destinés à alimenter les électrodes de la cellule en réactif et à collecter le courant produit,
chaque élément d'interface comprenant un élément distributeur (100) comportant au moins sur sa face en regard d'une des électrodes des canaux (111) de distribution pour la diffusion d'un réactif et au moins un élément collecteur (200) en matériau conducteur interposé entre l'élément distributeur et l'électrode, l'élément collecteur présentant des perforations (211) de manière à permettre la diffusion du réactif entre les canaux de l'élément distributeur (100) et l'électrode en regard de celui-ci,
**caractérisé en ce que** l'élément distributeur (100) est en matériau isolant.

2. Structure selon la revendication 1, **caractérisée en ce que** l'élément distributeur (100) est en matière plastique.

3. Structure selon la revendication 1 ou 2, **caractérisée en ce que** l'élément distributeur comprend en outre un circuit interne (130) de circulation de fluide de refroidissement.

4. Structure selon la revendication 3, **caractérisé en ce que** le circuit interne débouche en surface de l'élément distributeur dans au moins deux orifices et **en ce que** ces orifices sont isolés électriquement de l'élément conducteur.

5. Structure selon l'une des revendications 1 à 4, **caractérisée en ce que** l'élément collecteur (200) est en acier inoxydable ou en cuivre.

6. Structure selon l'une des revendications 1 à 5, **caractérisée en ce que** l'élément distributeur (100) comprend en outre des canaux (121) de distribution sur son autre face.

7. Structure selon la revendication 6, **caractérisée en ce que** les canaux (111) ménagés sur une première face de l'élément distributeur débouchent dans des premier et deuxième orifices (102; 106) traversant l'élément distributeur (100) et **en ce que** les canaux (121) ménagés sur la seconde face dudit élément débouchent dans des troisièmes et quatrième orifices (104; 108) traversant l'élément distributeur.

8. Structure selon la revendication 7, **caractérisée en ce que** l'élément collecteur (200) est constitué d'une feuille métallique pliée en deux de manière à définir deux portions (210, 220) de mêmes dimensions espacées l'une de l'autre et connectées électriquement, chaque portion présentant des perforations pour permettre la diffusion du réactif entre les canaux de l'élément distributeur et l'électrode adjacente, un élément distributeur (200) étant logé entre lesdites portions.

9. Structure selon la revendication 6, **caractérisée en ce que** les canaux (411; 421) ménagés sur les première et seconde faces de l'élément distributeur (400) débouchent ensembles dans des premier et second orifices (404, 408) traversant ledit élément.

10. Structure selon la revendication 9, **caractérisée en ce que** l'élément collecteur (500) est constitué d'une feuille métallique pliée en deux définissant deux portions (510, 520) de mêmes dimensions espacées l'une de l'autre et connectées électriquement, chaque portion présentant des perforations pour permettre la diffusion du réactif entre les canaux de l'élément distributeur et l'électrode adjacente, un élément distributeur, une cellule et une portion de l'élément collecteur adjacent (400) étant logés entre les portions dudit élément collecteur.

11. Structure selon l'une des revendications 1 à 10, **caractérisée en ce qu'**une étanchéité est réalisée entre l'élément distributeur et l'élément collecteur, l'étanchéité étant obtenue soit par rapprochement mutuel des surfaces desdits éléments, soit par interposition d'un ou plusieurs joint entre les surfaces desdits éléments, soit par collage des surfaces desdits éléments.

12. Pile à combustible comprenant au moins une structure selon l'une des revendications 1 à 11.

## Claims

1. A structure for a fuel cell comprising at least one cell (300) formed by first and second electrodes (310, 320) separated by an electrolyte, the cell being disposed between first and second interface elements for feeding the electrodes of the cell with reagent and for collecting the electric current it produced,
each interface element comprising a distributor element (100) including distribution channels (111) at least in its face facing one of the electrodes for the purpose of diffusing a reagent, and at least one collector element (200) of conductive material interposed between the electrode and the distributor element, the collector element presenting perforations (211) so as to enable the reagent to diffuse between the channels of the distributor element (100) and the electrode facing it,
**characterized in that** the distributor element is made of insulating material.

2. A structure according to claim 1, wherein the distributor element (100) is made of plastics material.

3. A structure according to claim 1 or 2, wherein the distributor element further includes an internal circuit (130) for circulating cooling fluid.

4. A structure according to claim 3, wherein the internal circuit opens out to the surface of the distributor element via at least two orifices, and wherein these orifices are electrically insulated from the conductor element.

5. A structure according to any one of claims 1 to 4, wherein the collector element (200) is made of stainless steel or of copper.

6. A structure according to any one of claims 1 to 5, wherein the distributor element (100) further includes distribution channels (121) in its other face.

7. A structure according to claim 6, wherein the channels (111) formed in a first face of the distributor element open out into first and second orifices (102, 106) passing through the distributor element (100), and wherein the channels (121) formed in the second face of said element open out into third and fourth orifices (104, 108) passing through the distributor element.

8. A structure according to claim 7, wherein the collector element (200) is constituted by a metal sheet that is folded in half so as to define two portions (210, 220) having the same dimensions that are spaced apart from each other and electrically connected together, each portion presenting perforations to enable reagent to diffuse between the channels of the distributor element and the adjacent electrode, a distributor element (200) being housed between said portions.

9. A structure according to claim 6, wherein the channels (411; 421) formed in the first and second faces of the distributor element (400) open out together into first and second orifices (404, 408) passing through said element.

10. A structure according to claim 9, wherein the collector element (500) is constituted by a metal sheet folded in half defining two portions (510, 520) of the same dimensions spaced apart from each other and electrically connected together, each portion presenting perforations to allow reagent to diffuse between the channels of the distributor element and the adjacent electrode, a distributor element, a cell, and a portion of the adjacent collector element (400) being received between the portions of said collector element.

11. A structure according to any one of claims 1 to 10, wherein sealing is provided between the distributor element and the collector element, which sealing is obtained either by urging the surfaces of said elements towards one another, or else by interposing one or more gaskets between said surfaces of said elements, or by applying adhesive to the surfaces of said elements.

12. A fuel cell including at least one structure according to any one of claims 1 to 11.

## Patentansprüche

1. Struktur für eine Brennstoffzelle, umfassend wenigstens eine Zelle (300), die von einer ersten und einer zweiten Elektrode (310, 320) gebildet ist, welche durch einen Elektrolyt getrennt sind, wobei die Zelle zwischen einem ersten und einem zweiten Schnittstellenelement angeordnet ist, die dazu bestimmt sind, die Elektroden der Zelle mit Reaktant zu versorgen und den erzeugten Strom zu sammeln,
wobei jedes Schnittstellenelement ein Verteilungselement (100), das wenigstens auf seiner Seite, die einer der Elektroden gegenüberliegt, Verteilungskanäle (111) für das Verteilen eines Reaktanten aufweist, sowie wenigstens ein Sammelelement (200) aus leitendem Werkstoff umfaßt, das zwischen dem Verteilungselement und der Elektrode eingefügt ist, wobei das Sammelelement Löcher (211) aufweist, um das Verteilen des Reaktanten zwischen den Kanälen des Verteilungselements (100) und der diesem gegenüberliegenden Elektrode zu ermöglichen,
**dadurch gekennzeichnet, daß** das Verteilungselement (100) aus isolierendem Werkstoff besteht.

2. Struktur nach Anspruch 1, **dadurch gekennzeichnet, daß** das Verteilungselement (100) aus Kunststoff besteht.

3. Struktur nach Anspruch 1 oder 2, **dadurch gekennzeichnet, daß** das Verteilungselement ferner einen internen Kreislauf (130) für die Zirkulation von Kühlflüssigkeit umfaßt.

4. Struktur nach Anspruch 3, **dadurch gekennzeichnet, daß** der interne Kreislauf an der Oberfläche des Verteilungselements in wenigstens zwei Öffnungen mündet und daß diese Öffnungen von dem leitenden Element elektrisch isoliert sind.

5. Struktur nach einem der Ansprüche 1 bis 4, **dadurch gekennzeichnet, daß** das Sammelelement (200) aus rostfreiem Stahl oder aus Kupfer besteht.

6. Struktur nach einem der Ansprüche 1 bis 5, **dadurch gekennzeichnet, daß** das Verteilungselement (100) ferner Verteilungskanäle (121) auf seiner anderen Seite aufweist.

7. Struktur nach Anspruch 6, **dadurch gekennzeichnet, daß** die Kanäle (111), die auf einer ersten Seite des Verteilungselements ausgebildet sind, in eine erste und eine zweite Öffnung (102; 106), die das Verteilungselement (100) durchqueren, münden, und daß die Kanäle (121), die auf der zweiten Seite des Elements ausgebildet sind, in dritte und vierte Öffnungen (104; 108), die das Verteilungselement durchqueren, münden.

8. Struktur nach Anspruch 7, **dadurch gekennzeichnet, daß** das Sammelelement (200) aus einer Metallfolie besteht, die einmal gefaltet ist, um zwei Abschnitte (210, 220) mit gleichen Abmessungen zu definieren, die voneinander beabstandet und elektrisch verbunden sind, wobei jeder Abschnitt Löcher aufweist, um das Verteilen des Reaktanten zwischen den Kanälen des Verteilungselements und der benachbarten Elektrode zu ermöglichen, wobei ein Verteilungselement (200) zwischen den Abschnitten aufgenommen ist.

9. Struktur nach Anspruch 6, **dadurch gekennzeichnet, daß** die Kanäle (411; 421), die auf der ersten und der zweiten Seite des Verteilungselements (400) ausgebildet sind, gemeinsam in eine erste und eine zweite Öffnung (404, 408), die das Element durchqueren, münden.

10. Struktur nach Anspruch 9, **dadurch gekennzeichnet, daß** das Sammelelement (500) aus einer einmal gefalteten Metallfolie besteht, die zwei Abschnitte (510, 520) mit gleichen Abmessungen definiert, die voneinander beabstandet und elektrisch verbunden sind, wobei jeder Abschnitt Löcher aufweist, um das Verteilen des Reaktanten zwischen den Kanälen des Verteilungselements und der benachbarten Elektrode zu ermöglichen, wobei ein Verteilungselement, eine Zelle und ein Abschnitt des benachbarten Sammelelements (400) zwischen den Abschnitten des Sammelelements aufgenommen sind.

11. Struktur nach einem der Ansprüche 1 bis 10, **dadurch gekennzeichnet, daß** zwischen dem Verteilungselement und dem Sammelelement eine Dichtigkeit hergestellt ist, wobei die Dichtigkeit entweder durch gegenseitiges Annähern der Oberflächen der Elemente oder durch Einfügen von einer oder mehreren Dichtungen zwischen den Oberflächen der Elemente oder durch Festkleben der Oberflächen der Elemente erreicht wird.

12. Brennstoffzelle, die wenigstens eine Struktur nach einem der Ansprüche 1 bis 11 umfaßt.
